# EUROPEAN PATENT APPLICATION

(11) **EP 4 640 033 A1**
(43) Date of publication of application: **29.10.2025**
(21) Application number: 24777694.1
(22) Date of filing: 11.03.2024
(51) Int. Cl.: A01D 43/063, A01G 20/43

(54) **GRASS COLLECTING APPARATUS AND MOWING DEVICE**

(30) Priority: 31.03.2023 CN 202320726290 U
(71) Applicant: Shenzhen Mammotion Innovation Co., Limited, Shenzhen, Guangdong 518000 (CN)
(72) Inventor: WEI, Jidong, Shenzhen, Guangdong 518000 (CN); XU, Yuanjun, Shenzhen, Guangdong 518000 (CN); WANG, Ben, Shenzhen, Guangdong 518000 (CN)
(74) Representative: Huang, Liwei
(86) International application number: PCT/CN2024/080973
(87) International publication number: WO 2024/198904

(57) **Abstract**

This disclosure provides a grass collection device and a mowing apparatus. The grass collection device is applied to the mowing apparatus. The grass collection device comprises a bracket, a rotary brush, and a ground-contacting roller. The bracket is movably installed on the mowing apparatus. The rotary brush is installed on the bracket and can rotate relative to the bracket. The ground-contacting roller is rotatably installed on the bracket and extends in a direction opposite to the bracket. When the ground-contacting roller contacts the ground, there is a gap between the rotary brush and the ground. This disclosure sets the bracket, the rotary brush, and the ground-contacting roller to make them cooperate with each other, so that the grass collection device can collect fallen leaves and weeds on the grassland; it can also adjust the grass collection device according to terrain undulations, automatically adapt to lawns with different heights, thicknesses, and grass species, so as to improve the grass collection effect of the grass collection device on different terrains; it can also prevent the rotary brush from contacting the grass roots and protect the grass roots.

## Description

This application claims the priority of Chinese Patent Application No. 202320726290.2, titled "Grass Collection Device and Mowing Apparatus" the disclosure of which is hereby incorporated herein by reference in its entirety.

### Technical Field

The present application relates to the field of grass collection apparatus, and more particularly to a grass collection apparatus and lawn mower.

### Background Art

Current mowing apparatus is unable to effectively collect fallen leaves, various debris, and cut grass blades from the lawn. These leaves, debris, and grass clippings may compromise the aesthetic appearance of the lawn and hinder healthy grass growth. The problem becomes more pronounced in terrains with undulations, where the ability of the mowing apparatus to collect such materials is significantly reduced.

### Summary

In view of the foregoing, a first aspect of the present disclosure provides a grass collection device, wherein that the grass collection device is applied to a mowing apparatus, the grass collection device comprises:
a bracket, wherein the bracket is movably mounted on the mowing apparatus;
a rotary brush, wherein the rotary brush is mounted on the bracket and rotatable relative to the bracket; and
a ground-contacting roller, wherein the ground-contacting roller is rotatably mounted on the bracket and extending in a direction opposite to the bracket, when the ground-contacting roller is in contact with the ground, a gap is maintained between the rotary brush and the ground.

According to a first aspect of the present invention, a grass collection device is provided, which includes a bracket, a rotary brush, and a ground-contacting roller. The rotary brush is rotatably connected to the bracket and is configured to contact the lawn and attract debris while rotating, thereby realizing the collection function of the grass collection device. The term "debris" as used herein refers to fallen leaves, cut grass blades, grass clippings, and the like.

First, the bracket is movably mounted on the lawn mower, that is, the bracket can rotate and swing relative to the lawn mower. The ground-contacting roller can contact the ground and can rotate relative to the bracket. Therefore, when the lawn mower drives the grass collection device to move, the ground-contacting roller can rotate relative to the bracket under the drive of the lawn mower. When the ground-contacting roller contacts the ground, the ground-contacting roller becomes an inert roller that can conform to the turf. During its up and down movement under the action of gravity, the grass collection device can be adjusted up and down within a certain range according to the terrain through the swinging of the entire bracket. The rotary brush also swings with the bracket, conforms to the changes in the ground, or rather, adapts to the changes in the terrain, thereby improving the grass collection effect of the grass collection device on different terrains.

For example, when encountering a raised terrain, the bracket will be lifted by the terrain under the support of the ground-contacting roller, and at the same time, the rotary brush will be lifted, thereby preventing the rotary brush from sinking too deeply into the grass roots. When the terrain has a depression, the ground-contacting roller will descend along with the terrain, so that the rotary brush will not be too far from the ground to affect the grass collection effect.

Secondly, when the ground-contacting roller is in contact with the ground, there is a spacing between the rotary brush and the ground. Since there is a spacing between the rotary brush and the ground, that is, the rotary brush does not directly contact the ground, it can avoid the situation where the rotary brush contacts the turf too deeply under the action of gravity, reducing the probability of motor overload and stalling. At the same time, it avoids the rotary brush contacting the grass roots and protects the grass roots. In other words, in the present disclosure, by making the ground-contacting roller contact the grassland, the ground-contacting roller plays a certain supporting role, avoiding the rotary brush from directly touching the ground and scraping the turf.

Accordingly, the present disclosure provides a grass collection device comprises a bracket, a rotary brush, and a ground-contacting roller, which cooperate with each other to enable effective collection of fallen leaves and weeds on the lawn. The structure allows the grass collection mechanism to automatically adapt to varying terrain contours, accommodating different lawn heights, thicknesses, and grass types, thereby improving the collection performance on uneven ground. Furthermore, the configuration prevents the rotary brush from coming into direct contact with the grass roots, thereby protecting the root system from potential damage.

The grass collection device according to claim 1, wherein the bracket comprises a first end and a second end opposite to the first end, the first end is rotatably connected to the mowing apparatus, and the rotary brush is rotatably mounted on the second end;
the bracket further comprises a connecting portion, the connecting portion is located between the first end and the second end and extends in a direction away from the bracket, the ground-contacting roller is mounted at the connecting portion.

The bracket comprises a first end and a second end opposite to the first end, the first end is rotatably connected to the mowing apparatus, and the rotary brush is rotatably mounted on the second end;
the bracket further comprises a connecting portion, the connecting portion is located between the first end and the second end and extends in a direction away from the bracket, the ground-contacting roller is mounted at the connecting portion.

The grass collection device further comprises a motor, the motor being mounted on the bracket and drivingly connected to the rotary brush, so as to enable the motor to drive the rotary brush to rotate.

The grass collection device further comprises a transmission member, the transmission member being mounted on the bracket and rotatably connecting the motor and the rotary brush.

The grass collection device further comprises a grass collection component, the grass collection component being mounted on the mowing apparatus, the grass collection component is provided with a collection opening, and the collection opening is arranged facing the rotary brush.

The grass collection device further comprises a guide member, the guide member being mounted on the bracket and located around a circumferential side of the rotary brush, the guide member extending towards the collection opening.

The rotary brush comprises a rotating shaft and bristles disposed on the rotating shaft, the bristles being arranged along an axial direction of the rotating shaft in a helical pattern, a straight shape pattern or a V-shape pattern.

The ground-contacting roller has a hollow interior.

An annular groove is provided on the outer circumferential surface of the ground-contacting roller.

In a second aspect, the present disclosure provides a mowing apparatus, wherein the mowing apparatus comprises:
a main body; and
the grass collection device according to any one of claims 1 - 9, wherein the bracket is movably mounted on the main body.

The lawn mower provided in the second aspect of the present disclosure adopts the grass collection device provided in the first aspect of the present disclosure. Due to the cooperative arrangement of the bracket, rotary brush, and ground-contact roller of the grass collection device, the device is capable of collecting fallen leaves and debris on the lawn. Additionally, the grass collection mechanism can adjust according to terrain undulations, automatically adapting to lawns with different heights, thicknesses, and grass types, thereby improving the grass collection effect on varied terrains. Moreover, the rotary brush avoids contact with grass roots, protecting the root zone. As a result, the grass collection device can cooperate with the main body to perform mowing and debris collection on lawns of different terrains, heights, thicknesses, and grass species, thereby enhancing the applicability and operational performance of the mowing apparatus.

### Brief Description of the Drawings

In order to more clearly illustrate the technical solutions in the embodiments of the present disclosure, the accompanying drawings required in the embodiments of the present disclosure will be described below.
FIG 1 is a side view of the grass collection device applied to the lawn mower in an embodiment of the present disclosure.
FIG 2 is a three-dimensional structural diagram of the grass collection device applied to the lawn mower in an embodiment of the present disclosure.
FIG 3 is a three - dimensional structural diagram of the grass collection device in an embodiment of the present disclosure.
FIG 4 is a three - dimensional structural diagram of the grass collection device in another embodiment of the present disclosure.
FIG 5 is a side view of the grass collection device in Figure 4 of the present disclosure.

### Label descriptions:

Grass collection device - 1, bracket - 11, first end - 111, second end - 112, connecting portion - 113, rotary brush - 12, ground-contacting roller - 13,
Annular groove - 131, motor - 14, transmission member - 15, grass collection component - 16, collection opening - 161, guide member - 17, lawn mower - 2.

### Detailed Description of Embodiments

The following are preferred embodiments of the present disclosure. It should be noted that for those of ordinary skill in the art, several improvements and refinements can be made without departing from the principles of the present disclosure, and these improvements and refinements are also considered to be within the scope of protection of the present disclosure.

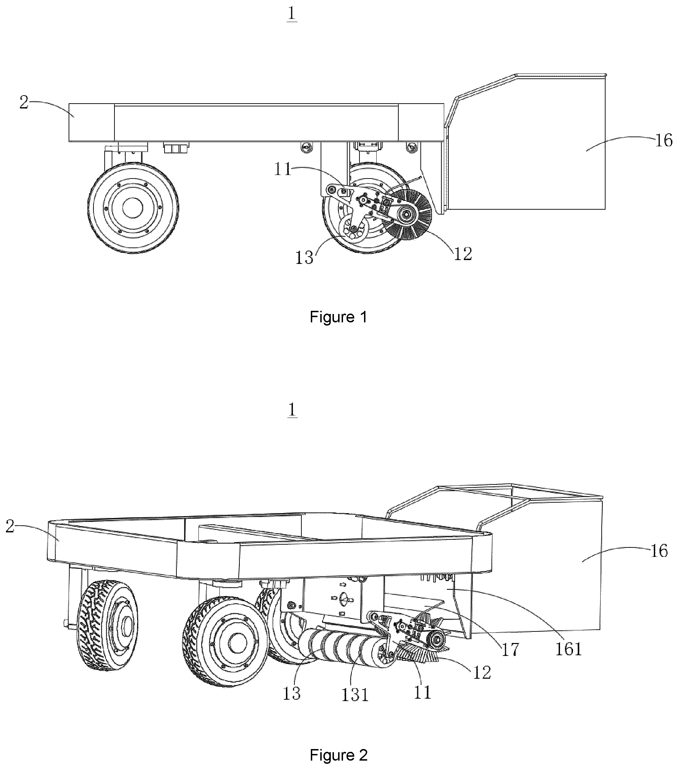

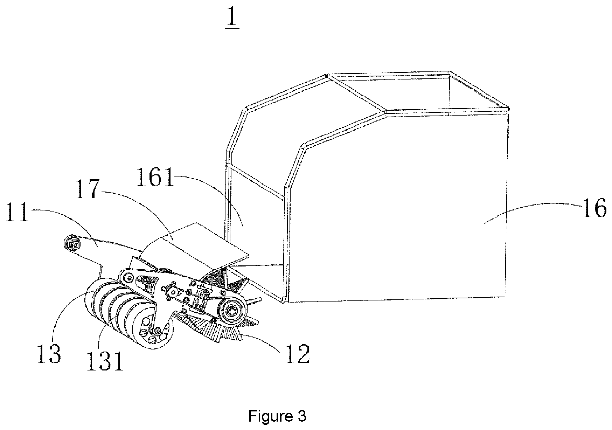

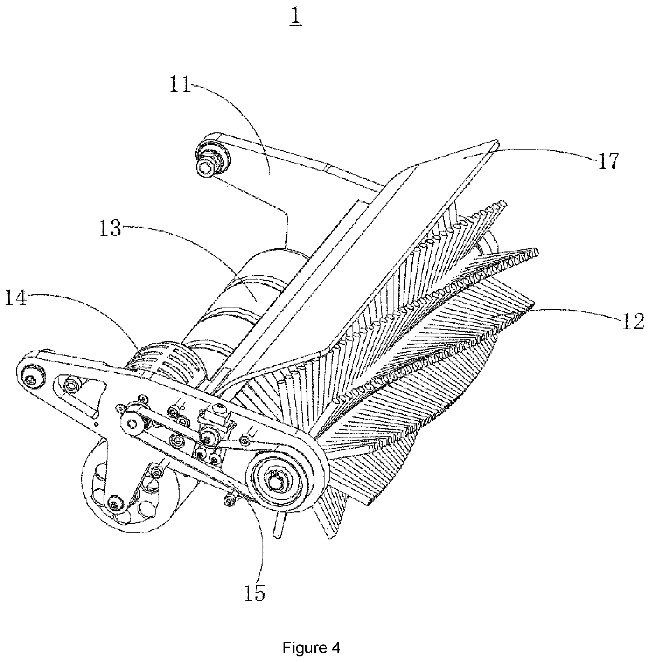

Please refer to Figures 1 - 4 together. Figure 1 is a side view of the grass collection device applied to the lawn mower in an embodiment of the present application. Figure 2 is a three-dimensional structural diagram of the grass collection device applied to the lawn mower in an embodiment of the present application. Figure 3 is a three-dimensional structural diagram of the grass collection device in an embodiment of the present application. Figure 4 is a three-dimensional structural diagram of the grass collection device in another embodiment of the present application.

This embodiment provides a grass collection device 1, The grass collection device 1 is applied to a lawn mower 2, the grass collection device 1 comprises a bracket 11, a rotary brush 12, and a ground-contacting roller 13, the bracket 11 is movably mounted on the lawn mower 2. The rotary brush 12 is mounted on the bracket 11 and can rotatable relative to the bracket 11. The ground-contacting roller 13 is rotatably mounted on the bracket 11 and extending in a direction opposite to the bracket 11, when the ground-contacting roller 13 contacts the ground, there is a gap between the rotary brush 12 and the ground.

Furthermore, the terms "comprising" and "having", as well as any of their variations, are intended to cover non-exclusive inclusions. The terms "first", "second", etc. in the specification and claims of the present application and the above-mentioned accompanying drawings are used to distinguish different objects, rather than to describe a specific order.

This embodiment provides a grass collection device 1 comprises a bracket 11, a rotary brush 12, and a ground-contacting roller 13. Among them, the rotary brush 12 is rotatably connected to the bracket 11, and the rotating brush 12 is configured to come into contact with the lawn and attract debris, thereby enabling the grass collection device 1 to perform its collecting function. The term "debris" herein refers to fallen leaves, grass clippings, shredded grass, and the like.

In some embodiment, the grass collection device 1 is applied to a lawn mower 2. The lawn mower 2 may comprise a walk-behind mower, a ride-on mower, and a fully automatic intelligent lawn mower, without limitation by the present invention. The lawn mower 2 can move on the ground. For example, the lawn mower 2 may be moved manually by a user. Alternatively, the mowing apparatus 2 may be capable of autonomous movement across the ground.

The grass collection device 1 provided in this embodiment comprises a bracket 11, which is configured to connect and fix the lawn mower 2, the rotary brush 12, and the ground-contacting roller 13. Among them, the bracket 11 is movably mounted on the lawn mower 2. It can also be understood that the bracket 11 is rotatably connected to the lawn mower 2, and the bracket 11 can rotate and swing relative to the lawn mower 2.

For example, the bracket 11 connects the respective components to form a rigid structure. At the front end of the bracket 11, two self-lubricating bushings are connected to the lawn mower 2, allowing the bracket 11 to drive the entire mechanism to swing about an axis defined by the connection with the lawn mower 2.

The grass collection device 1 provided in this embodiment further comprises a rotary brush 12 configured to collect debris. The rotary brush 12 is rotatably connected to the bracket 11 and can rotate relative to the bracket 11. Optionally, the rotary brush 12 is a plastic rod planted with nylon filaments. For example, when the rotary brush 12 contacts the grassland, the nylon bristles will bend due to frictional resistance. When leaving the grassland, the bent nylon bristles will give a force tangent to the outer circle of the rotary brush 12 to the contacted object, thereby imparting an upward velocity to the contacted debris such as fallen leaves and withered grass, enabling the debris to be collected and thus achieving the collection function of the grass collection device 1.

The grass collection device 1 provided in the embodiment further comprises a ground-contacting roller 13, configured to contact the ground. The ground-contacting roller 13 is rotatably connected to the bracket 11 and is able to rotate relative to the bracket 11. Moreover, as compared with the rotary brush 12, the ground-contacting roller 13 is positioned closer to the ground, so as to ensure a gap between the rotary brush 12 and the ground. In other words, when the rotary brush 12 has been mounted to the lawn mower 2, the lowest point of the rotary brush 12 should be higher than the lowest point of the ground-contacting roller 13, so as to ensure a gap between the rotary brush 12 and the ground.

Among them, the ground-contacting roller 13 is capable of rolling, and the lower end of the ground-contacting roller 13 is lower than the rotary brush 12. As a result, the ground-contacting roller 13 contacts the ground first and applies pressure to the lawn, pressing the grass in the rolling direction. The contact point between the ground-contacting roller 13 and the ground corresponds to the height of the grass after being flattened. As the ground-contacting roller 13 rolls past, the grass partially restores its upright position, the rotary brush 12 will then contact the upper part of the grass to prevent excessive resistance, getting stuck in the grass roots and causing the motor 14 to stall, which would affect the grass collection effect. In other words, by flattening the lawn, the ground-contacting roller 13 can reduce the resistance of the grass to the rotary brush 12, thereby improving the grass collection performance of the grass collection device 1.

First of all, when the lawn mower 2 drives the grass collection device 1 to move, the ground-contacting roller 13 can rotate relative to the bracket 11 under the drive of the lawn mower 2. When the ground-contacting roller 13 comes into contact with the ground, it acts as a passive roller that closely conforms to the surface of the lawn. During its vertical movement under the action of gravity, the grass collection device 1 is driven by the swinging of the whole bracket 11 to make vertical adjustments within a certain range according to the terrain. The rotary brush 12 also moves with the swinging of the bracket 11 to conform to the changes of the ground, or rather, adapt to the changes of the terrain, thereby improving the grass collection effect of the grass collection device 1 on different terrains.

For example, when encountering a raised terrain, the ground-contacting roller 13 will be first lifted by the terrain, which prevents the rotary brush 12 from being deeply stuck in the grass roots. When there is a depression in the terrain, the ground-contacting roller 13 will descend with the terrain, so that the rotary brush 12 will not be too far from the ground. Secondly, when the ground-contacting roller 13 is in contact with the ground, there is a gap between the rotary brush 12 and the ground. Since there is a gap between the rotary brush 12 and the ground, that is, the rotary brush 12 does not directly touch the ground, it can avoid the rotary brush 12 from reaching overly deep positions of the turf, reducing the chances of the motor 14 overloading and stalling. At the same time, the roller brush 12 is prevented from reaching the grass roots, thus protecting the root structure of the turf . In other words, in present disclosure, by ensuring that only the ground-contacting roller 13 makes contact with the lawn surface, the roller brush 12 is supported at an appropriate height, preventing it from scraping or damaging the turf.

Therefore, in this embodiment, by providing the bracket 11, the rotary brush 12 and the ground-contacting roller 13 to make them cooperate with each other, the grass collection device 1 can collect fallen leaves and weeds on the grassland; Additionally, the device is capable of adjusting to terrain undulations, thereby adapting automatically to lawns with different surface heights, thicknesses, and grass types, which improves the grass collection performance across diverse terrains. Furthermore, the rotary brush 12 is prevented from contacting the grass roots, ensuring root protection.

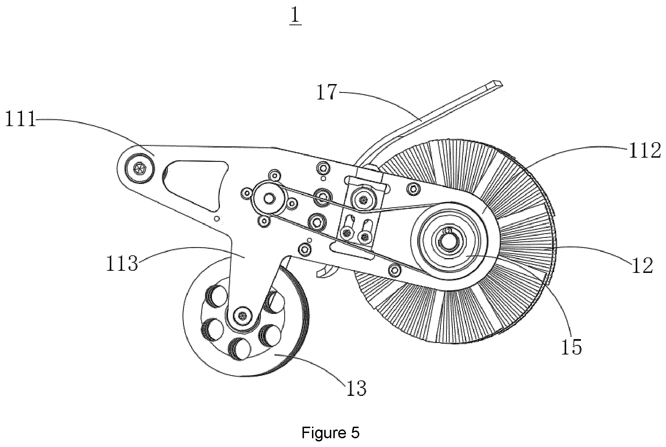

Please refer to Figures 1 - 5. Figure 5 is a side view of the grass collection device in Figure 4 of the present disclosure. In one embodiment, the bracket 11 comprises a first end 111 and a second end 112 opposite to the first end 111, the first end 111 is rotatably connected to the lawn mower 2, and the rotary brush 12 is rotatably mounted on the second end 112.

The bracket 11 further comprises a connecting portion 113. The connecting portion 113 is located between the first end 111 and the second end 112 and extends in a direction opposite to the bracket 11. The ground-contacting roller 13 is mounted at the connecting portion 113.

In one embodiment, the bracket 11 provided in this embodiment comprises a first end 111 and a second end 112 which are opposite to each other. The first end 111 is configured to connect the lawn mower 2, and the second end 112 is configured to connect the rotary brush 12. By respectively positioning the lawn mower 2 and the rotary brush 12 at opposite ends of the bracket 11, interference between the rotatable portion of the bracket 11 and the rotatable rotary brush 12 can be avoided, thereby improving the stability of the grass collection device 1.

In one embodiment, The bracket 11 further comprises a connecting portion 113, which is configured to connect the ground-contacting roller 13. The connection portion 113 is disposed between the first end 111 and the second end 112 and extends in a direction opposite to the bracket 11. Here, the direction opposite to the bracket 11 can also be understood as the direction towards the ground. Optionally, the connection portion 113 is closer to the ground compared to the second end 112. This configuration helps to avoid interference among the rotatable bracket 11, the rotatable roller brush 12, and the rotatable ground-contacting roller 13, thereby further enhancing the stability of the grass collection device 1.

Please refer to Figures 1 - 5. In one embodiment, the grass collection device 1 further comprises a motor 14. The motor 14 is mounted on the bracket 11 and drivingly connected to the rotary brush 12 so that the motor 14 can drive the rotary brush 12 to rotate.

In one embodiment, the grass collection device 1 further comprises a motor 14 for driving the rotary brush 12 to rotate. Optionally, the motor 14 is mounted on the inner side of the bracket 11. In present embodiment, By providing the motor 14, the roller brush 12 can be driven to rotate to collect debris .

For example, as shown in Figure 4, the rotating direction of the rotary brush 12 is clockwise when viewed from left to right. When the lawn mower 2 moves forward, that is, the grass collection device 1 moves to the left in Figure 4, the rotatable rotary brush 12 contacts the grassland, and the nylon bristles will bend due to frictional resistance. When leaving the grassland, the bent nylon bristles will give a force tangent to the outer circle of the rotary brush 12 to the contacted object, giving the leaves, dead grass and other debris that are contacted an upward velocity, adsorbing the debris to realize the collection function of the grass collection device 1.

Please refer to Figures 1 - 5. In one embodiment, the grass collection device 1 also comprises a transmission member 15, the transmission member 15 is mounted on the bracket 11 and is rotatably connected to the motor 14 and the rotary brush 12.

The grass collection device 1 provided in the embodiment further comprises a transmission member 15, which is configured to connect the motor 14 and the rotary brush 12. Optionally, the first end of the transmission member 15 is rotatably connected to the motor 14, and the second end of the transmission member 15 is rotatably connected to the rotary brush 12. Wherein, the transmission member 15 can include gears, belts, drive shafts, etc. This embodiment does not limit this.

In this embodiment, by setting the transmission member 15, the motor 14 can drive the rotary brush 12 to rotate by driving the rotation of the transmission member 15. In other words, the motor 14 indirectly drives the rotary brush 12 through the transmission member 15. Such a setting can better control the rotational speed of the rotary brush 12, thereby improving the grass collection performance of the grass collection device 1.

Alternatively, the transmission member 15 comprises a small pulley, a belt, and a large pulley. The motor 14 is rotatably connected to the small pulley, the rotary brush 12 is rotatably connected to the large pulley, and the belt is rotatably connected to the small pulley and the large pulley. For example, the motor 14 rotates through the small pulley, driving the belt to rotate and transmitting power to the large pulley, thereby driving the rotary brush 12 to rotate. Further optionally, the transmission member 15 also comprises a tensioning wheel, which is located between the small pulley and the large pulley and is used to abut against the belt.

Please refer to Figures 1 - 3. In one embodiment, the grass collection device 1 also comprises a grass collection component 16. The grass collection component 16 is mounted on the lawn mower 2. The grass collection component 16 is provided with a collection opening 161, and the collection opening 161 is arranged facing the rotary brush 12. The grass collection device 1 of this embodiment also comprises a grass collection component 16. The grass collection component 16 is used to contain and store debris collected by the rotary brush 12, such as fallen leaves, grass blades, chopped grass, etc. Optionally, the grass collection component 16 is a grass collection bag. Optionally, the grass collection component 16 is located on the side of the rotary brush 12 away from the ground-contacting roller 13. The collection opening 161 of the grass collection component 16 is disposed facing the rotary brush 12 so that the debris adsorbed by the rotary brush 12 can enter the grass collection component 16 through the collection opening 161.

In this embodiment, by providing the collection component 16 with a collection opening 161 that faces the roller brush 12, debris collected by the roller brush 12 can be more easily received and stored within the collection component 16, thereby enhancing the storage capacity of the grass collecting apparatus 1 and improving its overall grass collection efficiency.

Please refer to Figures 1 - 5. In one embodiment, the grass collection device 1 also comprises a guide member 17. The guide member 17 is mounted on the bracket 11 and is located around the rotary brush 12. The guide member 17 extends in the direction of the collection opening 161.

The grass collection device 1 of this embodiment also comprises a guide member 17, which is used to guide debris to move towards the collection opening 161 and thus enter the grass collection component 16. Optionally, the guide member 17 is a guide baffle. Optionally, the guide member 17 has a first portion and a second portion that are connected. The first portion is located between the ground-contacting roller 13 and the rotary brush 12, and the second portion is located between the lawn mower 2 and the rotary brush 12. The second part extends in the direction of the collection opening 161.

For example, as shown in Figure 4, the rotating direction of the rotary brush 12 is clockwise when viewed from left to right. When the lawn mower 2 moves forward, that is, the grass collection device 1 moves to the left in Figure 4, the rotary brush 12 contacts the grassland, and the nylon bristles will bend due to frictional resistance. When leaving the grassland, the leaves, dead grass and other debris that are contacted are given an upward velocity, so as to enter between the rotary brush 12 and the guide member 17. During this process, the debris that is lifted will come into contact with the rotary brush 12 multiple times, be continuously accelerated, and finally fly out along the upper edge of the guide member 17 and enter the grass collection component 16.

In this embodiment, by setting the guide member 17, debris is guided into the grass collection component 16, so that more debris can be placed in the grass collection component 16, improving the grass collection efficiency of the grass collection device 1.

In one embodiment, the rotary brush 12 comprises a rotating shaft and bristles disposed on the rotating shaft, the bristles being arranged along an axial direction of the rotating shaft in a helical pattern, a straight shape pattern or a V-shape pattern.

The rotating shaft is rotatably connected to the bracket 11, and the bristles are disposed on the periphery of the rotating shaft. For example, the bristled rotary brush 12 is a plastic rod planted with nylon filaments, with bearing mounting shafts at both ends and a large pulley. It is fixed on the bracket 11 through bearings on both sides; the bristles being arranged along an axial direction of the rotating shaft in a helical pattern, a straight shape pattern or a V-shape pattern , capable of rolling up grass leaves and other debris.

In this embodiment, the rotary brush 12 can have bristles of various shapes. Users can choose the shape of the bristles according to the height, thickness and type of the lawn to improve the grass collection effect of the grass collection device 1 on different lawns.

Please refer to Figures 1 - 5. In one embodiment, the ground-contacting roller 13 has a hollow interior .

In this embodiment, the interior of the ground-contacting roller 13 is hollow, which can also be understood as that the ground-contacting roller 13 has a through hole arranged along its own axial direction. By making the ground-contacting roller 13 hollow, the mass of the ground-contacting roller 13 is reduced, making the ground-contacting roller 13 lighter, reducing the power consumption of the grass collection device 1 and improving the working performance of the grass collection device 1.

Please refer to Figures 1 - 5. In one embodiment, an annular groove 131 is provided on the outer circumferential side of the ground-contacting roller 13.

In this embodiment, the outer circumferential side is provided with an annular groove 131. The provision of the annular groove 131 can reduce the mass of the ground-contacting roller 13, make the ground-contacting roller 13 lighter, reduce the power consumption of the grass collection device 1, and improve the working performance of the grass collection device 1.

Please refer to Figures 1 - 2. This disclosure provides a lawn mower 2. The lawn mower 2 comprises a main body and the grass collection device 1 provided above in present disclosure. The bracket 11 is movably mounted on the main body.

Among them, the lawn mower 2 can comprise apparatus for lawn care such as a fully automatic lawn mower. Optionally, the main body can drive the grass collection device 1 to move. Optionally, the main body includes a frame and driving wheels installed on the frame. The bracket 11 can be movably installed on the frame, and the driving wheels and the bracket 11 are arranged on the same side of the frame. Optionally, the rotating direction of the ground-contacting roller 13 is the same as the rotating direction of the driving wheels.

The lawn mower 2 provided in this embodiment uses the grass collection device 1 provided above in this disclosure. Since the bracket 11, the rotary brush 12 and the ground-contacting roller 13 of the grass collection device 1 cooperate with each other, the grass collection device 1 can collect fallen leaves and weeds on the grassland; it can also adjust the grass collection mechanism according to the undulations of the terrain, automatically adapt to lawns with different heights, thicknesses and grass species, so as to improve the grass collection effect of the grass collection device 1 on different terrains; it can also prevent the rotary brush 12 from contacting the grass roots and protect the grass roots, so that the grass collection device 1 can cooperate with the main body to mow grass and collect debris on lawns with different terrains, different heights, thicknesses and grass species, thereby improving the applicability and working performance of the lawn mower 2.

The above content provided by the embodiments of this disclosure has been introduced in detail. This article expounds and explains the principles and embodiments of this disclosure. The above descriptions are only used to help understand the methods and core ideas of this disclosure. At the same time, for those of ordinary skill in the art, based on the ideas of this application, there will be changes in specific embodiments and disclosure scopes. In conclusion, the content of this specification should not be construed as limiting this disclosure.

## Claims

1. A grass collection device, wherein that the grass collection device is applied to a mowing apparatus, the grass collection device comprises:
a bracket, wherein the bracket is movably mounted on the mowing apparatus;
a rotary brush, wherein the rotary brush is mounted on the bracket and rotatable relative to the bracket; and
a ground-contacting roller, wherein the ground-contacting roller is rotatably mounted on the bracket and extending in a direction opposite to the bracket, when the ground-contacting roller is in contact with the ground, a gap is maintained between the rotary brush and the ground.

2. The grass collection device according to claim 1, wherein the bracket comprises a first end and a second end opposite to the first end, the first end is rotatably connected to the mowing apparatus, and the rotary brush is rotatably mounted on the second end;
the bracket further comprises a connecting portion, the connecting portion is located between the first end and the second end and extends in a direction away from the bracket, the ground-contacting roller is mounted at the connecting portion.

3. The grass collection device according to claim 1, wherein the grass collection device further comprises a motor, the motor being mounted on the bracket and drivingly connected to the rotary brush, so as to enable the motor to drive the rotary brush to rotate.

4. The grass collection device according to claim 3, wherein the grass collection device further comprises a transmission member, the transmission member being mounted on the bracket and rotatably connecting the motor and the rotary brush.

5. The grass collection device according to claim 1, wherein the grass collection device further comprises a grass collection component, the grass collection component being mounted on the mowing apparatus, the grass collection component is provided with a collection opening, and the collection opening is arranged facing the rotary brush.

6. The grass collection device according to claim 5, wherein the grass collection device further comprises a guide member, the guide member being mounted on the bracket and located around a circumferential side of the rotary brush, the guide member extending towards the collection opening.

7. The grass collection device according to claim 1, wherein that the rotary brush comprises a rotating shaft and bristles disposed on the rotating shaft, the bristles being arranged along an axial direction of the rotating shaft in a helical pattern, a straight shape pattern or a V-shape pattern.

8. The grass collection device according to claim 1, wherein the ground-contacting roller has a hollow interior.

9. The grass collection device according to claim 1, wherein an annular groove is provided on the outer circumferential surface of the ground-contacting roller.

10. A mowing apparatus, wherein the mowing apparatus comprises:
a main body; and
the grass collection device according to any one of claims 1 - 9, wherein the bracket is movably mounted on the main body.
